# EUROPEAN PATENT SPECIFICATION

(11) **EP 2 844 363 B1**
(45) Date of publication and mention of the grant of the patent: **04.01.2023**
(21) Application number: 13784950.1
(22) Date of filing: 23.04.2013
(51) Int. Cl.: B01D 27/07, B01D 19/00, B01D 29/21, B01D 35/16, B01D 36/00

(54) **LIQUID RECOVERY FILTER**
FLÜSSIGKEITSGEWINNUNGSFILTER
FILTRE DE RÉCUPÉRATION DE LIQUIDE

(30) Priority: 30.04.2012 US 201213460583
(43) Date of publication of application: 11.03.2015
(73) Proprietor: Saint-Gobain Performance Plastics Corporation, Solon, OH 44139 (US)
(72) Inventor: LIN, Zhenwu, Pasadena, CA 91105 (US)
(74) Representative: Zimmermann & Partner Patentanwälte mbB
(86) International application number: PCT/US2013/037671
(87) International publication number: WO 2013/165734

(56) References cited:
- WO-A2-02/18037
- WO-A2-2005/118106
- WO-A2-2011/085012
- US-A- 5 776 342
- US-A- 5 928 516
- US-A1- 2007 017 879
- US-A1- 2008 060 992
- US-B2- 6 602 412
- US-B2- 8 110 102

## Description

### BACKGROUND OF THE DISCLOSURE

### 1. FIELD OF THE DISCLOSURE

The present disclosure relates generally to filtration devices and systems, and particularly to a liquid recovery filter assembly having an inlet and outlet, vent and purge ports for the drainage and recovery of unfiltered and filtered liquids from the filter housing and enclosed filter after filtering operations.

### 2. DESCRIPTION OF THE RELATED ART

Innumerable filtration devices and systems have been developed for the cleaning and purification of a wide range of gases and liquids. One area that requires extremely high quality filtration is in the field of pharmaceutical manufacture, where a number of different liquids are involved in the manufacturing processes of a large number of drugs and medications. These various liquids are often quite costly to produce, and as a result, much effort is expended to recover such liquids in a sterile manner during the manufacturing process, insofar as practicable for reuse.

One of the means used to recover such liquids is through the use of various filter assemblies. The liquid is passed through the filter assembly(s) and the purified liquid is recovered from the downstream or outlet side of the enclosed filter element. In one type of filter element used, the filter element conventionally has a generally toroidal configuration, the unfiltered liquid passing through the filter element from the outside and through the filter material to a hollow inner core, although other filter element configurations are certainly feasible. One problem with such filter configurations is that when the filter element is replaced, there is a volume of purified, filtered liquid still resident in the filter element within the filter housing or shell, as well as unfiltered liquid remaining within the filter housing and outside the filter element. These liquids are often quite valuable, as noted further above, and discarding these liquids when the filter element and/or entire filter assembly is periodically removed and replaced results in the loss of a considerable amount of valuable reusable liquid over some period of time.

One way to remove the resident filtered and unfiltered liquids is to introduce pressurized gas into the system to force the liquids out of the filter assembly. This approach, although effective, is problematic due to the relatively high bubble points of the filter materials used for specific applications, such as pharmaceutical uses. Filter materials with about 0.1 and 0.2 micron pore sizes have relatively high bubble points that require relatively high gas pressures to be used to evacuate the fluids. The introduction of high pressure gas can compromise the physical and functional integrity of the filter element and filter assembly by, for example, causing the filter element to separate from its attachment points, or causing the filter element to physically break that can lead subsequently to the unfiltered and the filtered liquids mixing downstream, which would compromise the intended sterility of the filtered fluid. In addition, assemblies using, for example, barbed connectors for hoses can experience hose breakage or separation from the barbed connectors due to the introduction of gas at a relatively high pressure.

What is needed is a filter recovery system that provides a means to removed valuable filtered and unfiltered liquids from a filter apparatus in a sterile manner. What is also needed is a filter recovery system that permits the use of a gas applied at a relatively low pressure to effectively remove resident filtered and unfiltered fluids while maintaining the sterility of the fluids in both upstream and downstream locations within a filter assembly. These and other problems are solved by the disclosed liquid recovery filter apparatus as described in the following disclosure summary.

WO02/18037A2 discloses a as vent filter construction capable of venting gas from a substantially closed liquid process stream, while impeding the release of a liquid species therefrom.

WO2005/118106A2 discloses an apparatus that can be used to treat fluids, the apparatus including a housing with an inlet for receiving a process fluid to be treated, the housing including a vent that aids in the removal of fluid components that separate from the process fluid.

US5776342A discloses disposable cartridge-type capsule filter assemblies having enhanced strength against internal pressure in the filter housing in a capsule type filter assembly which has inlet and outlet nozzles.

US5928516A discloses a method of forming a filter package, which method includes disposing a filter and a liquid in a container with the filter immersed in the liquid and sanitizing the liquid and the filter while in the container. The container may be vented during sanitizing to allow vapor of the liquid to exit from the container and prevent pressure from building up in the container.

### SUMMARY OF THE DISCLOSURE

Subject matter of the present disclosure is a liquid recovery filter as defined in claim 1. The dependent claims relate to particular embodiments thereof.

The liquid recovery filter assembly disclosed herein comprises a number of embodiments, each of the embodiments including a filter housing or shell containing a filter element therein. All of the embodiments have an inlet port extending into the upstream or inlet side of the shell, and an outlet extending from the core for some filter element configurations, or from a downstream portion of the filter element. The terms "inlet," "inlet side," "upstream," "upstream side," and similar terms all refer to the portion or volume of the filter assembly located on the inlet portion of the apparatus, i.e., between the filter housing or shell and the outer surface of the filter element containing unfiltered liquid during operation of the filter assembly. The terms "outlet," "outlet side," "downstream," "downstream side," and similar terms all refer to the volume of the filter assembly located within the core of the filter element for filter elements having a core, or located at a downstream end or side of the filter element containing filtered liquid that has passed through the filter element during operation of the filter assembly. The filter element defines the liquid permeable barrier between the upstream or inlet side and the downstream or outlet side of the assembly. Thus, all liquid must pass through the filter element from the designated inlet port to the designated outlet port of the filter assembly.

The filter housing or shell also has an upstream or inlet side vent or purge port or passage, and an upstream or inlet side drain port or passage. These two upstream ports or passages allow the outer portion of the filter shell or housing to be drained of unfiltered liquid, i.e., liquid that has not passed through the filter element from the upstream or inlet side to the downstream or outlet side of the filter.

Each of the liquid recovery filter embodiments further includes a downstream or outlet side vent/purge port or passage that communicates fluidly with the interior or downstream core or downstream end/side of the filter element. This downstream or outlet purge port is normally closed during filtering operations, but is opened when the filtration operation has been completed. The opening of this downstream vent or purge port allows air or other gas to flow into the core or downstream end/side of the filter element, thus "breaking the seal" or hydraulic lock formed within the core, or downstream end/side, of the filter element when the inlet and outlet valves or ports are closed. This allows the valuable filtered liquid contained within the core or downstream end/side of the filter element to flow from the filter assembly for recovery and reuse.

Two basic configurations of the liquid recovery filter are disclosed herein, one having a downstream or outlet port disposed at the bottom of the filter assembly, and the other having its downstream or outlet port disposed at or near the top of the assembly. The second of these configurations includes an additional downstream drain port or passage at the bottom of the assembly to allow liquid to flow from the core or downstream end of the filter element by gravity. The first basic configuration, i.e., having the main outlet port or passage disposed below the filter element, includes three different embodiments, which differ due to the different locations or arrangements of the primary inlet and outlet ports or passages. The second basic configuration, i.e., having the main outlet port or passage extending from the top or upper portion of the filter assembly, includes two additional embodiments, which also differ due to the different arrangements of the primary inlet and outlet ports or passages. However, each of the embodiments disclosed herein includes means for draining filtered liquid from the core or downstream end/side of the filter element.

Also disclosed are port/valve configurations and settings that permit fluid to be introduced into the filter assemblies in a reverse direction with the reassignment of vent and purge ports to remove the resident unfiltered and filtered fluids in a sterile manner from the apparatus after a filtering event. These and other features of the present disclosure will become readily apparent upon further review of the following drawings and detailed disclosure.

### BRIEF DESCRIPTION OF THE DRAWIGS

Fig. 1 is a front elevation view of a first embodiment of a liquid recovery filter according to one aspect of the disclosure, illustrating its general external configuration.
Fig. 2 is an elevation view in section of a liquid recovery filter according to another aspect of the disclosure having a generally inline flow path, illustrating its internal configuration.
Fig. 3 is an elevation view in section of a liquid recovery filter according to a further aspect of the disclosure having a generally C-shaped flow path, illustrating its internal configuration.
Fig. 4 is an elevation view in section of a liquid recovery filter according to a still further aspect of the disclosure having a generally L-shaped flow path, illustrating its internal configuration.
Fig. 5 is an elevation view in section of a liquid recovery filter according to yet another aspect of the disclosure having a generally T -shaped flow path, illustrating its internal configuration.
Fig. 6 is an elevation view in section of a liquid recovery filter according to another aspect of the disclosure having a generally S-shaped flow path, illustrating its internal configuration.

It should be understood that similar reference characters denote corresponding features consistently throughout the attached drawings.

### DETAILED DESCRIPTION OF THE DISCLOSURE

The liquid recovery filter comprises several embodiments, each configured for the recovery of liquids within the filter shell or housing and filter element after the completion of filtration operations, e.g., when a batch has been filtered and/or the filter element is to be changed, etc. While the filter shells or housings of the various liquid recovery filter embodiments are shown in the drawings as being permanently sealed structures (with the exception of their various inlet and outlet ports or passages), it should be understood that the filter shells or housings may be constructed as reusable units, permitting access to the filter element therein for replacement or cleaning and reuse.

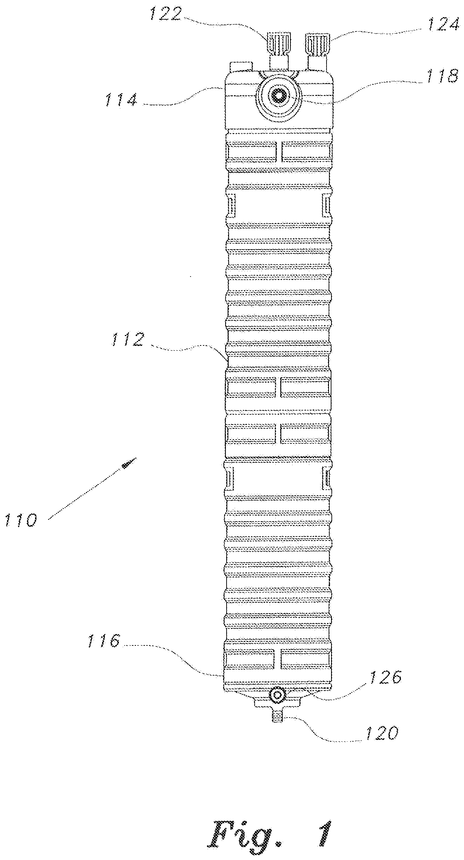

Referring to FIG. 1, a liquid recovery filter assembly is shown designated generally as **110**. The liquid recovery filter or filter assembly **110** includes an outer filter shell or housing **112** having an upper or inlet end **114** and an opposite lower or outlet end **116**, in addition to the outer cylindrical wall **112**. Filter assembly **110** will normally be oriented as shown in FIG. 1, with the inlet end **114** disposed above the outlet end **116**. Filter assembly **110** includes an upstream or inlet passage or port **118**, a generally opposite downstream or outlet passage or port **120** for the flow of filtered liquid from the device, an outlet vent passage **122** serving as a vent to the outlet side of the filter assembly, i.e., to the internal volume of the filter element contained within the housing or shell **112**, an upstream vent passage **124** communicating with the internal volume of the device between the shell or housing **112** and the filter element therein, and an upstream drain passage **126** for draining liquids from the internal volume between the shell **112** and the internal filter.

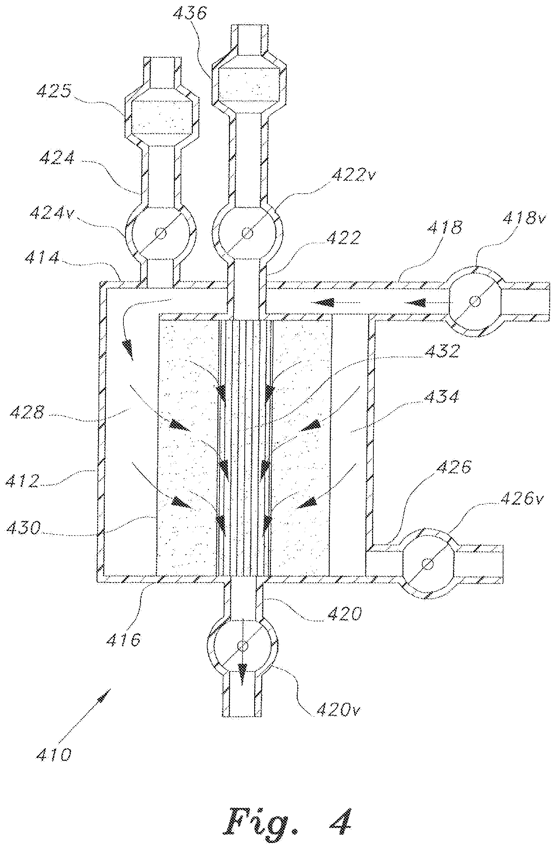

All of the embodiments of the liquid recovery device include these various vents, ports, and passages. However, the relationship and orientation of the various vents, ports, and passages are arranged differently in different embodiments. Some embodiments also include an additional port or passage to accommodate the specific arrangement or orientation of the other ports and passages. Moreover, the operational states and settings of the ports and associated valves may be varied and ports reassigned function to permit the reverse flow of fluid through the assemblies. The locations and orientations of the various ports and passages **118** through **126** of the liquid recovery filter assembly **110** of FIG. 1 most closely resemble the configuration of the liquid recovery filter embodiment of FIG. 4, discussed in detail below. Moreover, while the filter assembly **110** is shown having a relatively tall and narrow configuration, it should be understood that other configurations may be provided, depending upon the shape and configuration of the filter element contained therein, the placement of the various inlet and outlet ports or passages, and other factors. The various fittings and connectors, illustratively barbed connectors and quick connects, for the various ports and passages of the filter assembly **110** are conventional in the industry.

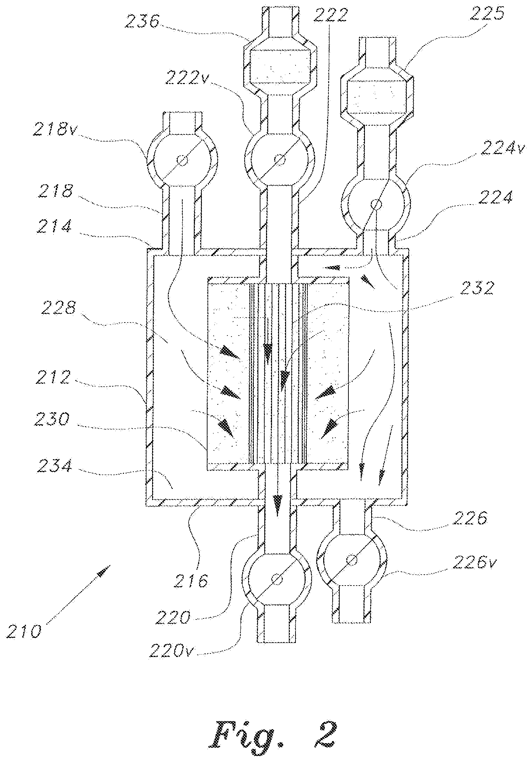

Referring now to FIG. 2, another aspect of the liquid recovery filter is shown designated generally as filter assembly **210**. It should be understood that while filter assembly **210** is considerably shorter and somewhat wider than filter assembly **110** of FIG. 1, the length and width of any of the filter embodiments shown in the drawings are by way of illustration and not limitation, and will depend upon the configuration of the filter element installed therein according to the intended use and operating environment. Filter assembly **210** includes a housing or shell **212** having an inlet end **214** and an opposite outlet end **216**. An inlet passage **218** extends from the inlet end **214** of the shell **212** axially parallel to the length of the filter, as defined by its inlet and outlet ends. An outlet passage **220** extends coaxially (with the filter) from the opposite lower outlet end **216** of shell **212**. An outlet vent/purge port **222** extends from upper inlet end **214** of filter shell or housing **212**.

Outlet vent/purge port **222** communicates with the outlet portion or core of the filter disposed within housing or shell **212**, as described in more detail below. An upstream vent passage **224** also extends from inlet end **214** of shell **212** for the purpose of venting the internal volume of filter shell **212** that surrounds the filter element therein. Lastly, an upstream drain passage **226** extends from outlet end **216** of shell **212** for draining liquids from the internal volume between shell **212** and the internal filter. This general external configuration is similar to filter assembly **110** of FIG. 1, with the exception of the orientation of inlet passage **218** and upstream drain passage **226**.

Filter shell or housing **212** defines an internal volume **228** having a filter element **230** disposed therein. The filter element preferably has a generally toroidal configuration and a hollow outlet core **232**. It should be understood that filter element **230** may conform to any regular or irregular geometric shape and configuration, e.g., pleated, hollow fiber, tubular, stacked disc, and may be formed from a variety of materials, e.g., polymeric, ceramic, or metallic membranes, hydrophobic membrane, hydrophilic membrane and combinations thereof, with varying porosities. It should be understood for filter elements made from, for example, hollow fiber and tubular materials, there is no "core", but a series of lumen that collectively function as a core disclosed herein. It should be further understood that filter **230** may be secured in any of the disclosed filter housings via thermal or sonic bonding, adhesive, O-ring seals and any combination of these methods as well any another other method used to secure filters in housings as are well known in the art.

Filter shell or housing **212** and filter element **230** contained therein define an upstream or inlet volume portion **234** between the filter shell **212** and the outer surface of the liquid permeable filter element **230**. Unfiltered liquid enters upstream volume **234** of filter assembly **210** via upstream or inlet passage **218** and passes through liquid permeable filter element **230** to hollow outlet core **232** of filter element **230**, and then exits filter **210** through outlet port **220** as filtered liquid.

It should further be noted that each of the various passages or ports **218** through **226** includes a valve therein. The valves are designated as valves **218v** through **226v**, respectively. The valves **218v** through **226v** are shown schematically in FIG. 2, and may be any suitable type of valve known and used in the art. During normal filtering operations, only inlet valve **218v** and outlet valve **220v** will be open, the other three valves **222v**, **224v**, and **226v** remain closed. With this port configuration, liquid passing through filter assembly **210** must pass from upstream or inlet volume **234** through permeable filter element **230**, and into hollow core **232** of filter element **230** as filtered liquid before leaving filter assembly **210** through the downstream or outlet port or passage **220**.

The above-described operation presents no problems with liquid recovery, as long as the operation is essentially continuous. However, when the liquid stream must be interrupted for some reason, e.g., to clean the liquid delivery lines or passages, to change batches of liquid, to replace the filter or filter element, etc., the flow of liquid through filter assembly **210** must be shut off. This is easily accomplished by closing the inlet and outlet passage valves **218v** and **220v**. This, however, leaves some quantity of both unfiltered and filtered liquid within the filter housing or shell **212**. As this liquid is often quite valuable, particularly in the pharmaceutical industry, it represents a fairly substantial financial cost or loss if it is discarded when filter assembly **210** is removed or replaced. Moreover, there may be additional costs associated with disposing of a filter containing such a liquid, if the liquid is considered to be a biohazard or requires special handling to contain and/or discard.

The various aspects and embodiments of the liquid recovery filter assemblies disclosed herein are configured to address this problem by providing structural means to drain the filter housing or shell of resident liquid in a sterile manner when the filtering operation is terminated. This permits the recovery of the valuable liquid within the filter for reuse. This is accomplished by means of opening one, some or all of the outlet vent/purge port **222**, the upstream or inlet volume vent passage **224**, and the upstream or inlet volume drain passage **226** in sequentially and/or concurrently. When filtering operations are terminated and the remaining liquid trapped within filter assembly **210** is to be drained, the primary inlet passage valve **218v** is closed to terminate liquid flow through filter assembly **210**. Filtration of the unfiltered liquid remaining within the unfiltered upstream or inlet side volume portion **234** of filter assembly **210** is accomplished by forcing it through the filter element **230** to drain as processed or filtered liquid from the filter outlet passage **220**.

A brief discussion of the characteristics of a conventional filter element, similar to element **230** is warranted. Filter elements used in many areas of the pharmaceutical industry, and likewise for other industries and operations, often utilize extremely fine filtration membranes having porosities on the order of fractional micron sizes. The level or degree of filtration is often quantified according to the "bubble point" of the filter, i.e., the differential pressure required to force air (or other gas) through the wetted filter element. In general, the smaller the filter porosity, the greater the bubble point. This pressure is equal to the pressure required to force the liquid through the pores of the wetted filter. Finer porosity requires a greater differential pressure between the inlet and the outlet of a filter assembly. The bubble point test also serves as a test or check of the integrity of the filter element. The bubble point of many filters used in the pharmaceutical industry may be 45 psi, or even higher, so that the pressure required to force a liquid of higher viscosity through a relatively small porosity filter during operating conditions is even greater.

With this explanation in mind, with respect to the disclosed filter assemblies, it is not sufficient merely to open the upstream vent passage valve **224v** to break the suction of filter assembly **210**. Instead, air (or other gas) must be applied to the open upstream vent passage **224** at sufficient pressure to force the residual unfiltered liquid through the filter element **230** and out the outlet passage **220** of filter assembly **210**. Upstream vent passage **224** may include an inline filter **225** therein to preclude contamination of the liquid being forced through the filter element **230** by the air or gas introduced through the upstream vent passage **224**. In this manner, most of the unfiltered liquid within the filter assembly **210** is filtered and recovered as filtered and processed liquid, as is accomplished during standard filter operation.

Once recovery of unfiltered liquid has been accomplished as just described, any remaining unfiltered liquid in filter housing **212**, outside filter element **230** is removed from the filter assembly by opening lower upstream volume drain passage valve **226v** while maintaining open counterpart upstream volume vent passage valve **224v** per the liquid recovery method disclosed above. This relieves any partial vacuum or suction that may impede the flow of the liquid from the upstream volume drain passage **226**, and permits any remaining residual unfiltered liquid to flow freely from filter housing or shell **212**.

The valuable filtered liquid remaining in core **232** of filter element **230** is recovered by opening the outlet vent passage valve **222v** at the opposite end of the filter **210**. Outlet passage **220** and its associated valve **220v** are maintained in an open condition as in the initial liquid recovery operation disclosed above. This allows the remaining filtered liquid within core **232** of filter element **230** to drain from filter assembly **210** for recovery. A gas (air, nitrogen, carbon dioxide, etc., as appropriate), may be introduced into filter core **232** through outlet vent/purge port **222** to assist in the removal of liquid from the core, particularly if the liquid is relatively viscous. Due to the use of the accessory drain and vent ports, the pressure of the introduced gas needed to evacuate the resident fluid will be lower than what would be needed if the accessory drain and vent ports were not incorporated into the disclosed filter assemblies. To ensure sterile recovery of the downstream fluids, outlet vent/purge port **222** is fitted with an inline filter **236** to preclude contamination of the filtered liquid being removed from filter core **232** by the air or gas introduced through vent/purge port **222**.

The configuration of filter assembly **210** may also perform the intended fluid filter and recovery functions when the fluid flow is reversed through the assembly. In this functional configuration, outlet port **220** is reassigned as an inlet port and upstream drain passage port **226** is reassigned as a downstream outlet port. Downstream vent/purge port **222** is maintained in a closed condition during the main filtering operation. When used in this manner, fluid introduced into port **220** (with valve **220v** open), flows into core **232** (or the lumen of the filter element if constructed from, for example, hollow fiber or tubular material), and radially outwardly through filter element **230** into internal volume **228** and out of the filter assembly through port **226** as processed fluid. In this functional configuration, inlet **218** is maintained in a closed condition by closing inlet valve **218v**. Once the intended volume of fluid is filtered through assembly **210**, valve **220v** is closed to cease flow.

To remove the resident unfiltered fluid (resident in core **232**), pressurized gas is introduced into the filter assembly via vent/purge port **222** (reassigned as an upstream vent passage port), by connecting a gas supply to vent/purge port **222** and opening valve **222v**. Reassigned upstream vent/purge port **222** includes an inline filter **236** therein to preclude contamination of the liquid being forced through the filter element **230** by the air or gas introduced through the reassigned upstream vent/purge port **222**. Once the resident unfiltered fluid is forced through filter element **230**, and removed from the filter assembly as processed fluid via port **226**, valve **222v** is closed. This reversed functional use of the filter assembly will result in filtered fluid remaining in internal volume **228**, upstream vent port **224** may be reassigned as a purge port or downstream vent passage port made operational by opening valve **224v**. Pressurized gas is again introduced into the filter assembly's internal volume **228** via port **224**, purging filtered fluid out of the port **226** for recovery. Reassigned downstream vent passage **224** ma include an inline filter **225** therein to preclude contamination of the filtered liquid being forced out of the filter assembly via the port **226** by the air or gas introduced through the reassigned downstream vent passage **224**. Once the purge function is completed and the introduction of pressurized gas is ceased by closing valve **224v**, valve **226v** may be closed to prepare for another filter cycle.

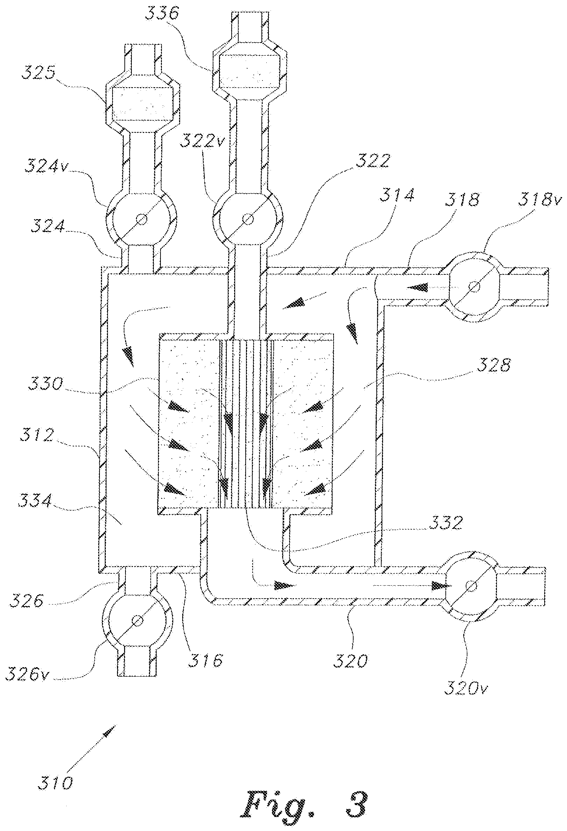

Referring now to FIG. 3, in another aspect of the disclosure, an alternative embodiment of the liquid recovery filter assembly is shown designated generally as **310**. Filter assembly **310** includes all of the components and elements disclosed above for filter assembly **210**, i.e., a filter housing or shell **312** having mutually opposed first or upper and second or lower ends **314** and **316** defining an interior volume **328**, and a toroidal filter element **330** secured therein. Filter element **330** and surrounding housing or shell **312** define an upstream or inlet volume **334** therebetween. Filter element **330** has a hollow core **332**. An upstream vent passage **324** and its associated valve **324v** extend from the upper or inlet end **314** of shell **312**. An opposite upstream or inlet side drain passage **326** and its associated valve **326v** extend from the lower or downstream or outlet end **316** of filter housing or shell **312**.

The difference between filter assembly **210** of FIG. 2 and filter assembly **310** of FIG. 3 lies in the orientation of their respective inlet and outlet ports or passages. It will be seen in FIG. 3 that an upstream or inlet port or passage **318** and its associated valve **318v** extend radially from upper end **314** of filter housing or shell **312**. A downstream or outlet port or passage **320** and its associated valve **320v** extend from filter core **332** radially from lower or outlet end **316** of filter shell or housing **312**. This configuration may be more readily installed in certain processing systems than the inline configuration of filter assembly **210** of FIG. 2. The liquid flow paths through filter assembly **310** during normal filtering operations and during the draining or purging of filter assembly **310** are essentially the same as those disclosed above for filter assembly **210**.

An outlet vent passage valve **322v** secured in line with outlet vent/purge port **322**, upstream vent passage valve **324v**, and upstream drain passage valve **326v** are closed during normal filtering operations, i.e., when the upstream or inlet and downstream or outlet valves **318v** and **320v** are open to permit flow through the filter **310**. Draining or purging of liquid from filter **310** is accomplished in the same manner as disclosed above for filter assembly **210**, i.e., inlet valve **318v** is closed and upstream vent passage and upstream drain passage valves **324v** and **326v** are opened to drain unfiltered liquid from the upstream volume portion **334** of filter housing **312** through filter element **330**. The pressurized gas may pass through an inline filter **325** installed in an upstream vent passage **324**. Once all of the liquid that can be purged through filter element **330** has been recovered, any remaining unfiltered liquid in filter housing **312**, but outside filter element **330** may be removed from the filter assembly by opening lower upstream volume drain passage valve **326v** while maintaining open counterpart upstream volume vent passage valve **324v** as per the liquid recovery operation disclosed above. This permits any remaining residual unfiltered liquid to flow freely from filter housing or shell **312**. Upstream volume vent passage valve **324v** and upstream volume drain passage valve **326v** are then closed and outlet vent passage valve **322v** is opened to allow the remaining filtered liquid to drain or to be purged or flushed from filter core **332**. To ensure sterile recovery of the downstream fluids, outlet vent/purge port **322** is fitted with an inline filter **336** to preclude contamination of the filtered liquid being removed from filter core **332** by the air or gas introduced through vent/purge port **322**.

The configuration of filter assembly **310** may also perform the intended fluid filter and recovery functions when the fluid flow is reversed through the assembly. In this functional configuration, outlet port **320** is reassigned as an inlet port and upstream drain passage port **326** is reassigned as a downstream outlet port. Downstream vent/purge port **322** is maintained in a closed condition during the main filtering operation. When used in this manner, fluid introduced into port **320** (with valve **320v** open), flows into core **332** (or the lumen of the filter element if constructed from, for example, hollow fiber or tubular material), and radially outwardly through filter element **330** into internal volume **328** and out of the filter assembly through port **326** as processed fluid. In this functional configuration, inlet **318** is maintained in a closed condition by closing inlet valve **318v**. Once the intended volume of fluid is filtered through assembly **310**, valve **320v** is closed to cease flow.

To remove the resident unfiltered fluid (resident in core **332**), pressurized gas is introduced into the filter assembly via vent/purge port **322** (reassigned as an upstream vent passage port), by connecting a gas supply to vent/purge port **322** and opening valve **322v**. Reassigned upstream vent/purge port **322** includes an inline filter **336** therein to preclude contamination of the liquid being forced through the filter element **330** by the air or gas introduced through the reassigned upstream vent/purge port **322**. Once the resident unfiltered fluid is forced through filter element **330**, and removed from the filter assembly as processed fluid via port **326**, valve **322v** is closed. This reversed functional use of the filter assembly will result in filtered fluid remaining in internal volume **328**, upstream vent port **324** may be reassigned as a purge port or downstream vent passage port made operational by opening valve **324v**. Pressurized gas is again introduced into the filter assembly's internal volume **328** via port **324**, purging filtered fluid out of the port **328** for recovery. Reassigned downstream vent passage **324** may include an inline filter **325** therein to preclude contamination of the filtered liquid being forced out of the filter assembly via the port **326** by the air or gas introduced through the reassigned downstream vent passage **324**. Once the purge function is completed and the introduction of pressurized gas is ceased by closing valve **324v**, valve **326v** may be closed to prepare for another filter cycle.

Referring now to Fig. 4, another alternative embodiment of the liquid recovery filter assembly is shown designated generally as **410**. Filter assembly **410** includes all of the components and elements disclosed above for filter assemblies **210** and **310**, i.e., a filter housing or shell **412** having mutually opposed first or upper and second or lower ends **414** and **416** defining an interior volume **428**, and a toroidal filter element **430** secured therein. Filter element **430** and surrounding housing or shell **412** define an upstream or inlet volume **434** therebetween. Filter element **430** has a hollow core **432**. An upstream vent passage **424** and its associated valve **424v** extend from upper or inlet end **414** of shell **412**. An opposite upstream or inlet side drain passage **426** and its associated valve **426v** extend from lower or downstream or outlet end **416** of filter housing or shell **412**.

Filter assembly **410** may be considered a hybrid of filter assemblies **210** and **310**. An upstream or inlet passage **418** of filter assembly **410** extends radially from upper end **414** of filter housing or shell **412** in essentially the same orientation as the corresponding component **318** of filter assembly **310**. However, a downstream or outlet passage **420** extends coaxially from filter shell **412** in the manner of outlet passage **220** of filter housing **210**. This configuration provides further installation options.

The liquid flow paths through filter assembly **410** during normal filtering operations and during the draining or purging of filter assembly **410** are essentially the same as those disclosed above for filter assemblies **210** and **310**. An outlet vent passage valve **422v** connected to an outlet vent/purge port **422**, the upstream vent passage valve **424v**, and the upstream drain passage valve **426v** are closed during normal filtering operations, i.e., when the upstream or inlet and downstream or outlet valves **418v** and **420v**, respectively, are open to permit flow through the filter assembly **410**.

Draining or purging of liquid from the filter assembly **410** is accomplished in the same manner as disclosed above for filter assemblies **210** and **310**, i.e., inlet valve **418v** is closed and upstream vent passage valve is opened to allow pressurized gas to force unfiltered liquid from upstream volume portion **434** of filter housing **412** through filter element **430**. The pressurized gas may pass through an inline filter **425** installed in upstream vent passage **424**. Once all the liquid that can be purged through filter element **430** has been recovered, any remaining unfiltered liquid in filter housing **412** and outside filter element **430** is removed from the filter assembly by opening lower upstream volume drain passage valve **426v** while maintaining open counterpart upstream volume vent passage valve **424v** per the liquid recovery operation disclosed above. This allows any remaining residual unfiltered liquid to flow freely from filter housing or shell **412**. Upstream volume vent passage valve **424v** and upstream volume drain passage valve **426v** are then closed and outlet passage valve **422v** is opened to allow the remaining filtered liquid to drain or to be purged or flushed from filter core **432**. To ensure sterile recovery of the downstream fluids, outlet vent/purge port **422** is fitted with an inline filter **436** to preclude contamination of the filtered liquid being removed from filter core **432** by the air or gas Introduced through vent/purge port **422**.

The configuration of filter assembly **410** may also perform the intended fluid filter and recovery functions when the fluid flow is reversed through the assembly. In this functional configuration, outlet port **420** is reassigned as an inlet port and upstream drain passage port **426** is reassigned as a downstream outlet port. Downstream vent/purge port **422** is maintained in a closed condition during the main filtering operation. When used in this manner, fluid introduced into port **420** (with valve **420v** open), flows into core **432** (or the lumen of the filter element if constructed from, for example, hollow fiber or tubular material), and radially outwardly through filter element **430** into internal volume **428** and out of the filter assembly through port **426** as processed fluid. In this functional configuration, inlet **418** is maintained in a closed condition by closing inlet valve **418v**. Once the intended volume of fluid is filtered through assembly **410**, valve **420v** is closed to cease flow.

To remove the resident unfiltered fluid (resident in core **432**), pressurized gas is introduced into the filter assembly via vent/purge port **422** (reassigned as an upstream vent passage port), by connecting a gas supply to vent/purge port **422** and opening valve **422v**. Reassigned upstream vent/purge port **422** includes an inline filter **436** therein to preclude contamination of the liquid being forced through the filter element **430** by the air or gas introduced through the reassigned upstream vent/purge port **422**. Once the resident unfiltered fluid is forced through filter element **430**, and removed from the filter assembly as processed fluid via port **426**, valve **422v** is closed. This reversed functional use of the filter assembly will result in filtered fluid remaining in internal volume **428**, upstream vent port **424** may be reassigned as a purge port or downstream vent passage port made operational by opening valve **424v**. Pressurized gas is again introduced into the filter assembly's internal volume **428** via port **424**, purging filtered fluid out of the port **426** for recovery. Reassigned downstream vent passage **424** may include an inline filter **425** therein to preclude contamination of the filtered liquid being forced out of the filter assembly via the port **426** by the air or gas introduced through the reassigned downstream vent passage **424**. Once the purge function is completed and the introduction of pressurized gas is ceased by closing valve **424v**, valve **426v** may be closed to prepare for another filter cycle.

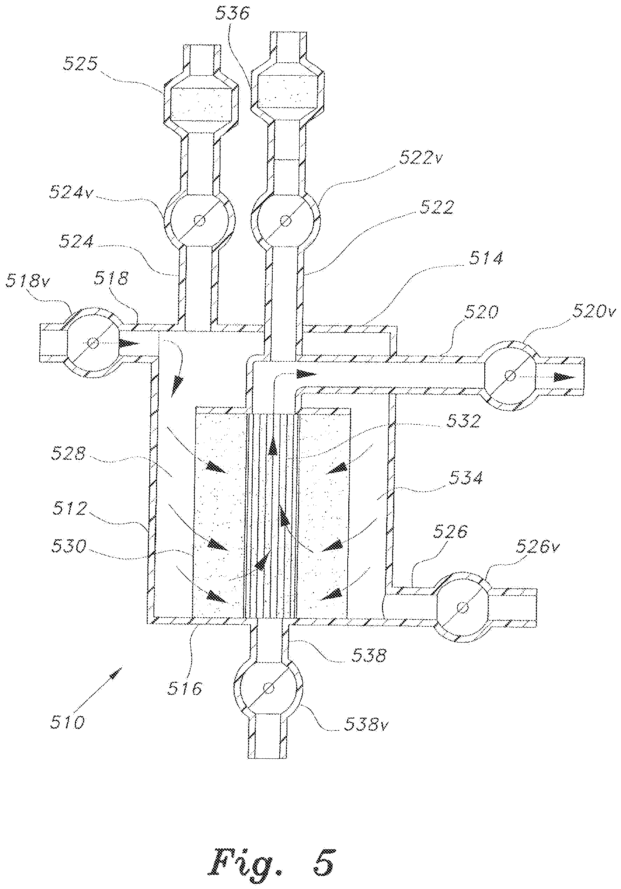

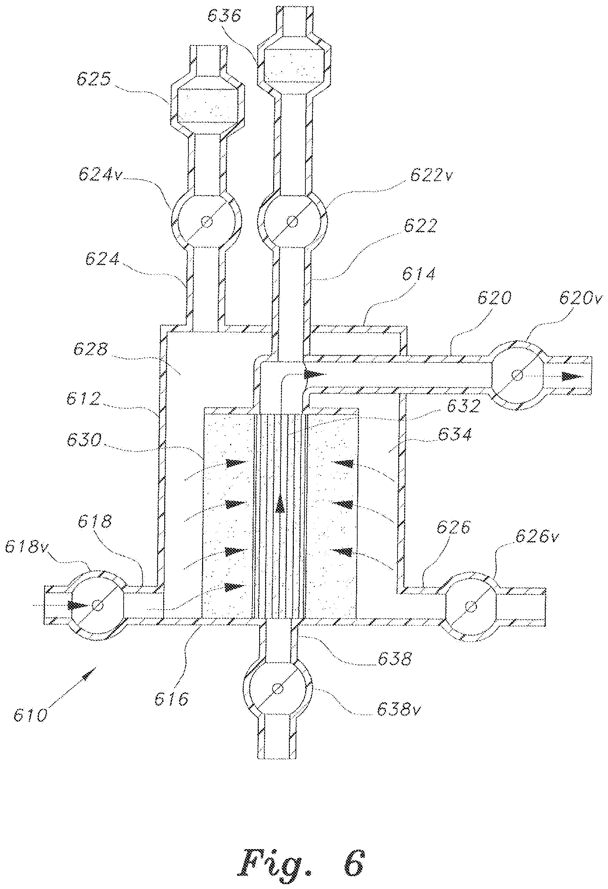

Referring now to FIGS. 5 and 6, additional embodiments of the liquid recovery filter assemblies are shown designated generally as **510** and **610**, respectively. It will be seen that each of the filter embodiments of FIGS. 5 and 6 includes an additional drain passage or port communicating with the downstream or outlet core volume of the filter element. This is due to the placement of the downstream or outlet passage away from the filter core, which is relatively high in the filter housing.

FIG. 5 shows a liquid recovery filter assembly **510** having an additional drain passage, as described briefly above. For the most part, filter assembly **510** includes corresponding components to those disclosed above for filter assemblies **210** through **410**, i.e., a filter housing or shell **512** having mutually opposed first or upper and second or lower ends **514** and **516**, respectively, defining an interior volume **528**, and a toroidal filter element **530** secured therein. Filter element **530** and surrounding housing or shell **512** define an upstream or inlet volume **534** therebetween. Filter element **530** has a hollow core **532**. An upstream vent passage **524** and its associated valve **524v** extend from upper or inlet end **514** of shell **512**. An opposite upstream or inlet side drain passage **526** and its associated valve **526v** extend radially from lower or downstream or outlet end **516** of filter housing or shell **512**.

The placement of a downstream or outlet passage or port **520** extending substantially radially from upper end **514** of filter housing or shell **512** requires that the liquid passing through filter assembly **510** flows upward from the lower portions of filter core **532** to exit the filter. Otherwise, liquid flow through filter assembly **510** is substantially as disclosed above for the other filter assembly embodiments, i.e., an outlet vent passage valve **522v**, upstream vent passage valve **524v**, and upstream drain passage valve **526v** are closed during normal filtering operations, and upstream or inlet and downstream or outlet valves **518v** and **520v**, respectively, are open to permit flow through filter assembly **510**. However, it will be seen that a sixth port or passage **538** and its associated valve **538v** extend from lower end **516** of filter shell or housing **512**, in fluid communication with filter core **532**. Port or passage **538** serves as an outlet drain passage for draining filter core **532**. Its valve **538v** must be closed during normal filtering operations. Liquid flow during normal filtering operations initially passes through radially disposed upstream or inlet passage **518** and its normally open valve **518v** at upper end **514** of filter housing or shell **512**, and enters interior volume **534** between filter housing or shell **512** and filter element **530**. The liquid then passes through filter element **530** and into filter core **532**, and then upward and out of core **532** to flow from radially disposed downstream or outlet passage **520** and its normally open valve **520v** at upper end **514** of filter housing or shell **512**.

Draining or purging of liquid from filter assembly **510** is accomplished in a procedure similar to the procedure disclosed above for the other filter assembly embodiments, but with some differences due to the presence of upwardly disposed outlet passage **520**. Inlet valve **518v** is closed and upstream vent passage valve **524v** is opened to allow pressurized gas to force unfiltered liquid from upstream volume portion **534** of filter housing **512** through filter element **530**. The pressurized gas may pass through an inline filter **525** installed in upstream vent passage **524**.

Once all the liquid that can be purged through filter element **530** has been recovered, any remaining unfiltered liquid in filter housing **512** and outside filter element **530** is removed from the filter housing by opening lower upstream volume drain passage valve **526v** while maintaining open counterpart upstream volume vent passage valve **524v** per the liquid recovery operation disclosed above. This permits any remaining residual unfiltered liquid to flow freely from filter housing or shell **512**. Upstream volume vent passage valve **524v** and upstream volume drain passage valve **526v** are then closed and outlet vent passage valve **522v** is opened to allow the remaining filtered liquid to drain or to be purged or flushed from filter core **532**. To ensure sterile recovery of the downstream fluids, outlet vent/purge port **522** is fitted with an inline filter **536** to preclude contamination of the filtered liquid being removed from filter core **532** by the air or gas introduced through vent/purge port **522**. However, it will be seen that due to the high position of downstream or outlet passage **520**, the introduction of a purging gas through vent/purge port **522** cannot flush liquid from filter core **532**. Accordingly, outlet passage valve **520v** is closed and outlet drain passage valve **538v** in fluid communication with filter core **532** is opened to allow any liquid contained in filter core **532** to flow downward, i.e., in the reverse direction of its flow during normal filtering operations, and out through outlet drain passage **538** and its associated valve **538v**.

The configuration of filter assembly **510** may also perform the intended fluid filter and recovery functions when the fluid flow is reversed through the assembly. In this functional configuration, outlet port **520** is reassigned as an inlet port and upstream drain passage port **526** is reassigned as a downstream outlet port. Downstream vent/purge port **522** is maintained in a closed condition during the main filtering operation. When used in this manner, fluid introduced into port **520** (with valve **520v** open), flows into core **532** (or the lumen of the filter element if constructed from, for example, hollow fiber or tubular material), and radially outwardly through filter element **530** into internal volume **528** and out of the filter assembly through port **526** as processed fluid. In this functional configuration, inlet **518** is maintained in a closed condition by closing inlet valve **518v**. In addition, port **538** is also maintained in a closed condition by closing inlet valve **538v**. Once the intended volume of fluid is filtered through assembly **510**, valve **520v** is closed to cease flow.

To remove the resident unfiltered fluid (resident in core **532**), pressurized gas is introduced into the filter assembly via vent vent/purge port **522** (reassigned as an upstream vent passage port), by connecting a gas supply to vent/purge port **522** and opening valve **522v**. Reassigned upstream vent/purge port **522** includes an inline filter **536** therein to preclude contamination of the liquid being forced through the filter element **530** by the air or gas introduced through the reassigned upstream vent/purge port **522**. Once the resident unfiltered fluid is forced through filter element **530**, and removed from the filter assembly as processed fluid via port **526**, valve **522v** is closed. This reversed functional use of the filter assembly will result in filtered fluid remaining in internal volume **528**, upstream vent port **524** may be reassigned as a purge port or downstream vent passage port made operational by opening valve **524v**. Pressurized gas is again introduced into the filter assembly's internal volume **528** via port **524**, purging filtered fluid out of the port **526** for recovery. Reassigned downstream vent passage **524** may include an inline filter **525** therein to preclude contamination of the filtered liquid being forced out of the filter assembly via the port **526** by the air or gas introduced through the reassigned downstream vent passage **524**. Once the purge function is completed and the introduction of pressurized gas is ceased by closing valve **524v**, valve **526v** may be closed to prepare for another filter cycle.

Referring now to FIG. 6, a yet further aspect of the liquid recovery filter assembly designated generally as **610** has a configuration similar to that of filter assembly **510**, i.e., with a filter outlet passage extending radially from an upper end portion **614** of a housing or shell **612**. Filter assembly **610** includes components corresponding to those disclosed above for filter assembly **510**, i.e., filter housing or shell **612** having mutually opposed first or upper and second or lower ends **614** and **616**, respectively, defining an interior volume **628**, and a toroidal filter element **630** secured therein. Filter element **630** and surrounding housing or shell **612** define an upstream or inlet volume **634** therebetween. Filter element **630** has a hollow core **632**. An upstream vent passage **624** and its associated valve **624v** extend from upper or inlet end **614** of shell **612**. An opposite upstream or inlet side drain passage **626** and its associated valve **626v** extend radially from lower or downstream or outlet end **616** of filter housing or shell **612**.

Liquid flow through filter housing **610** is essentially as disclosed above for filter assembly **510**. An outlet vent passage valve **622v** connected to an outlet vent/purge port **622**, upstream vent passage valve **624v**, and upstream drain passage valve **626v** are closed during normal filtering operations, and upstream or inlet and downstream or outlet valves **618v** and **620v**, respectively, are open to permit flow through filter assembly **610**. An outlet drain passage valve **638v** is also closed during normal filtering operations. Liquid flow during normal filtering operations initially passes through radially disposed upstream or inlet passage **618** and its normally open valve **618v** at lower end **616** of filter housing or shell **612**, and then enters the interior volume **634** between filter housing or shell **612** and filter element **630**. The liquid then passes through filter element **630** and into filter core **632**, and upward out of core **632** to flow from radially disposed downstream or outlet passage **620** and its normally open valve **620v** at upper end **614** of filter housing or shell **612**.

Draining or purging of liquid from the filter **610** is accomplished essentially as disclosed above for liquid recovery filter assembly **510**. Inlet valve **618v** is closed, and upstream vent passage valve **624v** is opened to allow pressurized gas to force unfiltered liquid from upstream volume portion **634** of filter housing 612v through filter element 630. The pressurized gas may pass through an inline filter **625** installed in upstream vent passage **624**.

Once all the liquid that can be purged through filter element **630** has been recovered, any remaining unfiltered liquid in filter housing **612** and outside filter element **630** is removed from the filter housing by opening lower upstream volume drain passage valve **626v** while maintaining open counterpart upstream volume vent passage valve **624v** per the liquid recovery operation disclosed above. This permits any remaining residual unfiltered liquid to flow freely from filter housing or shell **612**. Upstream volume vent passage valve **624v** and upstream volume drain passage valve **626v** are then closed and outlet vent passage valve **622v** is opened to allow the remaining filtered liquid to drain or to be purged or flushed from filter core **632**. To ensure sterile recovery of the downstream fluids, outlet vent/purge port **622** is fitted with an inline filter **636** to preclude contamination of the filtered liquid being removed from filter core **632** by the air or gas introduced through vent/purge port **622**. However, it will be seen that due to the high position of downstream or outlet passage **620**, the introduction of a purging gas through vent/purge port **622** cannot flush liquid from filter core **632**. Accordingly, outlet passage valve **620v** is closed and outlet drain passage valve **638v** in fluid communication with filter core **632** is opened to allow any liquid contained in filter core **632** to flow downward, i.e., in the reverse direction of its flow during normal filtering operations, and out through outlet drain passage **638** and its associated valve **638v**.

The configuration of filter assembly **610** may also perform the intended fluid filter and recovery functions when the fluid flow is reversed through the assembly. In this functional configuration, outlet port **620** is reassigned as an inlet port and upstream drain passage port **626** is reassigned as a downstream outlet port. Downstream vent/purge port **622** is maintained in a closed condition during the main filtering operation. When used in this manner, fluid introduced into port **620** (with valve **220v** open), flows into core **632** (or the lumen of the filter element if constructed from, for example, hollow fiber or tubular material), and radially outwardly through filter element **630** into internal volume **628** and out of the filter assembly through port **626** as processed fluid. In this functional configuration, inlet **618** is maintained in a closed condition by closing inlet valve **618v**. In addition, port **638** is also maintained in a closed condition by closing inlet valve **638v**. Once the intended volume of fluid is filtered through assembly **610**, valve **620v** is closed to cease flow.

To remove the resident unfiltered fluid (resident in core **632**), pressurized gas is introduced into the filter assembly via vent/purge port **622** (reassigned as an upstream vent passage port), by connecting a gas supply to vent/purge port **622** and opening valve **622v**. Reassigned upstream vent/purge port **622** includes an inline filter **636** therein to preclude contamination of the liquid being forced through the filter element **630** by the air or gas introduced through the reassigned upstream vent/purge port **622**. Once the resident unfiltered fluid is forced through filter element **630**, and removed from the filter assembly as processed fluid via port **626**, valve **622v** is closed. This reversed functional use of the filter assembly will result in filtered fluid remaining in internal volume **628**, upstream vent port **624** may be reassigned as a purge port or downstream vent passage port made operational by opening valve **624v**. Pressurized gas is again introduced into the filter assembly's internal volume **628** via port **624**, purging filtered fluid out of the port 626 for recovery. Reassigned downstream vent passage **624** may include an inline filter **625** therein to preclude contamination of the filtered liquid being forced out of the filter assembly via the port **626** by the air or gas introduced through the reassigned downstream vent passage **624**. Once the purge function is completed and the introduction of pressurized gas is ceased by closing valve **624v**, valve **626v** may be closed to prepare for another filter cycle.

Accordingly, the various embodiments of the disclosed liquid recovery filter apparatus provide an effective means to recover costly liquids used in filtering operations particularly in the pharmaceutical as well as in other industries. It should be understood that the various axial and radial configurations of the various inlet and outlet passages or ports illustratively depicted in the drawings and disclosed herein are merely exemplary, and that various other arrangements of these ports or passages are within the contemplation of the disclosure that provide a means for the drainage or removal of liquid from the filter housing or shell, and particularly for the drainage or removal of filtered liquid from the core of the filter.

## Claims

1. A liquid recovery filter comprising:
a filter shell (212, 312, 412, 512, 612) having an upper end (214, 314, 414, 514, 614), a lower end (216, 316, 416, 516, 616) opposite the upper end (214, 314, 414, 514, 614), and a cylindrical wall extending between the upper end (214, 314, 414, 514, 614) and the lower end (216, 316, 416, 516, 616), the shell (212, 312, 412, 512, 612) defining an internal volume (228, 328, 428, 528, 628);
a filter element (230, 330, 430, 530, 630) disposed within the filter shell (212, 312, 412, 512, 612), whereby a gap formed between the shell (212, 312, 412, 512, 612) and the filter element (230, 330, 430, 530, 630) defines an upstream section (234, 334, 434, 534, 634) of the internal volume (228, 328, 428, 528, 628), the filter element (230, 330, 430, 530, 630) having an inlet side and an outlet core (232, 332, 432, 532, 632), the inlet side of the filter element (230, 330, 430, 530, 630) communicating fluidly with the upstream section (234, 334, 434, 534, 634);
an inlet passage (218, 318, 418, 518, 618) disposed through the filter shell (212, 312, 412, 512, 612), the inlet passage (218, 318, 418, 518, 618) communicating fluidly with the upstream section (234, 334, 434, 534, 634);
an outlet passage (220, 320, 420, 520, 620) disposed through the filter shell (212, 312, 412, 512, 612), the outlet passage (220, 320, 420, 520, 620) communicating fluidly with the outlet core (232, 332, 432, 532, 632) of the filter element (230, 330, 430, 530, 630);
**characterized by** a downstream vent/purge port (222, 322, 422, 522, 622) disposed through the filter shell (212, 312, 412, 512, 612) with an inline gas filter (236, 336, 436, 536, 636) disposed in the downstream vent/purge port (222, 322, 422, 522, 622), the downstream vent/purge port (222, 322, 422, 522, 622) communicating fluidly with the outlet core (232, 332, 432, 532, 632) of the filter element (230, 330, 430, 530, 630), wherein the vent/purge port (222, 322, 422, 522, 622) is configured to permit the introduction of a gas under pressure, sterilized by the inline gas filter (236, 336, 436, 536, 636), into the outlet core (232, 332, 432, 532, 632) to purge filtered liquids, retained in the outlet core (232, 332, 432, 532, 632) after a filtering operation is terminated, out of the outlet passage (220, 320, 420, 520, 620) to recover the retained filtered liquids.

2. The liquid recovery filter according to claim 1 wherein the outlet passage (220, 320, 420) is disposed through the lower end (216, 316, 416) of the filter shell (212, 312, 412), and wherein the downstream vent/purge port (222, 322, 422, 522, 622) is disposed through the upper end (214, 314, 414, 514, 614) of the filter shell (212, 312, 412, 512, 612).

3. The liquid recovery filter according to claim 1 wherein the outlet passage (520, 620) is disposed through the upper end (514, 614) of the filter shell (512, 612), and wherein the downstream vent/purge port (222, 322, 422, 522, 622) is disposed through the upper end (214, 314, 414, 514, 614) of the filter shell (212, 312, 412, 512, 612).

4. The liquid recovery filter according to claim 1 further comprising:
an upstream vent passage (224, 324, 424, 524, 624) disposed through the filter shell (212, 312, 412, 512, 612), the upstream vent passage (224, 324, 424, 524, 624) communicating fluidly with the upstream section (234, 334, 434, 534, 634); and,
an upstream drain passage (226, 326, 426, 526, 626) disposed through the filter shell (212, 312, 412, 512, 612), the upstream drain passage (226, 326, 426, 526, 626) communicating fluidly with the upstream section (234, 334, 434, 534, 634).

5. The liquid recovery filter according to claim 1 wherein the inlet passage (218) is disposed substantially axially through the upper end (214) of the filter shell (212), and wherein the outlet passage (220, 320, 420) is disposed through the lower end (216, 316, 416) of the filter shell (212, 312, 412) and extends substantially coaxially with the filter element (230, 430).

6. The liquid recovery filter according to claim 1 wherein the inlet passage (318, 418, 518) is disposed substantially radially through the upper end (314, 414, 514) of the filter shell (312, 412, 512), and wherein the outlet passage (320) is disposed substantially radially through the lower end (316) of the filter shell (312).

7. The liquid recovery filter according to claim 4 further comprising an inline gas filter (225, 325, 425, 525, 625) disposed in the upstream vent passage (224, 324, 424, 524, 624).

8. The liquid recovery filter according to claim 1 further comprising:
an outlet drain passage (538, 638) disposed through the lower end (516, 616) of the filter shell (512, 612), the outlet drain passage (538, 638) communicating fluidly with the outlet core (532, 632) of the filter element (530, 630), wherein the outlet passage (520, 620) is disposed through the upper end (514, 614) of the filter shell (512, 612).

9. The liquid recovery filter according to claim 8 further comprising:
an upstream vent passage (224, 324, 424, 524, 624) disposed through the filter shell (212, 312, 412, 512, 612), the upstream vent passage (224, 324, 424, 524, 624) communicating fluidly with the upstream section (234, 334, 434, 534, 634); and,
an upstream drain passage (226,326, 426, 526, 626) disposed through the filter shell (212,312, 412, 512, 612), the upstream drain passage (226, 326, 426, 526, 626) communicating fluidly with the upstream section (234, 334, 434, 534, 634).

10. The liquid recovery filter according to claim 1 or 8 wherein the inlet passage (318, 418, 518) is disposed substantially radially through the upper end (314, 414, 514) of the filter shell (312, 412, 512), and wherein the outlet passage (520) is disposed substantially radially through the upper end (514) of the filter shell (512), substantially opposite the inlet passage (518).

11. The liquid recovery filter according to claim 1 or 8 wherein the inlet passage (618) is disposed substantially radially through the lower end (616) of the filter shell (612), and wherein the outlet passage (620) is disposed substantially radially through the upper end (614) of the filter shell (612), generally diametrically opposite the inlet passage (618).

12. The liquid recovery filter according to claim 9 further comprising an inline gas filter (225, 325, 425, 525, 625) disposed in the upstream vent passage (224, 324, 424, 524, 624).

## Patentansprüche

1. Flüssigkeitsrückgewinnungsfilter, umfassend:
ein Filtergehäuse (212, 312, 412, 512, 612), das ein oberes Ende (214, 314, 414, 514, 614), ein unteres Ende (216, 316, 416, 516, 616) gegenüber dem oberen Ende (214, 314, 414, 514, 614) und eine zylindrische Wand aufweist, die sich zwischen dem oberen Ende (214, 314, 414, 514, 614) und dem unteren Ende (216, 316, 416, 516, 616) erstreckt, wobei das Gehäuse (212, 312, 412, 512, 612) ein Innenvolumen (228, 328, 428, 528, 628) definiert;
ein Filterelement (230, 330, 430, 530, 630), das innerhalb des Filtergehäuses (212, 312, 412, 512, 612) angeordnet ist, wodurch ein zwischen dem Gehäuse (212, 312, 412, 512, 612) und dem Filterelement (230, 330, 430, 530, 630) gebildeter Spalt einen vorgelagerten Abschnitt (234, 334, 434, 534, 634) des Innenvolumens (228, 328, 428, 528, 628) definiert, wobei das Filterelement (230, 330, 430, 530, 630) eine Einlassseite und einen Auslasskern (232, 332, 432, 532, 632) aufweist, wobei die Einlassseite des Filterelements (230, 330, 430, 530, 630) in Fluidverbindung mit dem vorgelagerten Abschnitt (234, 334, 434, 534, 634) steht;
einen Einlassdurchgang (218, 318, 418, 518, 618), der durch das Filtergehäuse (212, 312, 412, 512, 612) angeordnet ist, wobei der Einlassdurchgang (218, 318, 418, 518, 618) in Fluidverbindung mit dem vorgelagerten Abschnitt (234, 334, 434, 534, 634) steht;
einen Auslassdurchgang (220, 320, 420, 520, 620), der durch das Filtergehäuse (212, 312, 412, 512, 612) angeordnet ist, wobei der Auslassdurchgang (220, 320, 420, 520, 620) in Fluidverbindung mit dem Auslasskern (232, 332, 432, 532, 632) des Filterelements (230, 330, 430, 530, 630) steht;
**gekennzeichnet durch** einen nachgelagerten Entlüftungs-/Spülanschluss (222, 322, 422, 522, 622), der durch das Filtergehäuse (212, 312, 412, 512, 612) mit einem in dem nachgelagerten Entlüftungs-/Spülanschluss (222, 322, 422, 522, 622) angeordneten Inline-Gasfilter (236, 336, 436, 536, 636) angeordnet ist, wobei der nachgelagerte Entlüftungs-/Spülanschluss (222, 322, 422, 522, 622) in Fluidverbindung mit dem Auslasskern (232, 332, 432, 532, 632) des Filterelements (230, 330, 430, 530, 630) steht, wobei der Entlüftungs-/Spülanschluss (222, 322, 422, 522, 622) so konfiguriert ist, dass er die Einleitung eines durch den Inline-Gasfilter (236, 336, 436, 536, 636) sterilisierten Gases unter Druck in den Auslasskern (232, 332, 432, 532, 632) ermöglicht, um nach Beendigung eines Filtervorgangs im Auslasskern (232, 332, 432, 532, 632) zurückgehaltene Flüssigkeiten aus dem Auslassdurchgang (220, 320, 420, 520, 620) zu spülen, um die zurückgehaltenen gefilterten Flüssigkeiten zurückzugewinnen.

2. Flüssigkeitsrückgewinnungsfilter nach Anspruch 1, wobei der Auslassdurchgang (220, 320, 420) durch das untere Ende (216, 316, 416) des Filtergehäuses (212, 312, 412) angeordnet ist und wobei der nachgelagerte Entlüftungs-/Spülanschluss (222, 322, 422, 522, 622) durch das obere Ende (214, 314, 414, 514, 614) des Filtergehäuses (212, 312, 412, 512, 612) angeordnet ist.

3. Flüssigkeitsrückgewinnungsfilter nach Anspruch 1, wobei der Auslassdurchgang (520, 620) durch das obere Ende (514, 614) des Filtergehäuses (512, 612) angeordnet ist und wobei der nachgelagerte Entlüftungs-/Spülanschluss (222, 322, 422, 522, 622) durch das obere Ende (214, 314, 414, 514, 614) des Filtergehäuses (212, 312, 412, 512, 612) angeordnet ist.

4. Flüssigkeitsrückgewinnungsfilter nach Anspruch 1, ferner umfassend:
einen vorgelagerten Entlüftungsdurchgang (224, 324, 424, 524, 624), der durch das Filtergehäuse (212, 312, 412, 512, 612) angeordnet ist, wobei der vorgelagerte Entlüftungsdurchgang (224, 324, 424, 524, 624) in Fluidverbindung mit dem vorgelagerten Abschnitt (234, 334, 434, 534, 634) steht; und
einen vorgelagerten Entleerungsdurchgang (226, 326, 426, 526, 626), der durch das Filtergehäuse (212, 312, 412, 512, 612) angeordnet ist, wobei der vorgelagerte Entleerungsdurchgang (226, 326, 426, 526, 626) in Fluidverbindung mit dem vorgelagerten Abschnitt (234, 334, 434, 534, 634) steht.

5. Flüssigkeitsrückgewinnungsfilter nach Anspruch 1, wobei der Einlassdurchgang (218) im Wesentlichen axial durch das obere Ende (214) des Filtergehäuses (212) angeordnet ist und wobei der Auslassdurchgang (220, 320, 420) durch das untere Ende (216, 316, 416) des Filtergehäuses (212, 312, 412) angeordnet ist und sich im Wesentlichen koaxial mit dem Filterelement (230, 430) erstreckt.

6. Flüssigkeitsrückgewinnungsfilter nach Anspruch 1, wobei der Einlassdurchgang (318, 418, 518) im Wesentlichen radial durch das obere Ende (314, 414, 514) des Filtergehäuses (312, 412, 512) angeordnet ist und wobei der Auslassdurchgang (320) im Wesentlichen radial durch das untere Ende (316) des Filtergehäuses (312) angeordnet ist.

7. Flüssigkeitsrückgewinnungsfilter nach Anspruch 4, ferner umfassend einen Inline-Gasfilter (225, 325, 425, 525, 625), der in dem vorgelagerten Entlüftungsdurchgang (224, 324, 424, 524, 624) angeordnet ist.

8. Flüssigkeitsrückgewinnungsfilter nach Anspruch 1, ferner umfassend:
einen Auslassablaufdurchgang (538, 638), der durch das untere Ende (516, 616) des Filtergehäuses (512, 612) angeordnet ist, wobei der Auslassablaufdurchgang (538, 638) in Fluidverbindung mit dem Auslasskern (532, 632) des Filterelements (530, 630) steht, wobei der Auslassdurchgang (520, 620) durch das obere Ende (514, 614) des Filtergehäuses (512, 612) angeordnet ist.

9. Flüssigkeitsrückgewinnungsfilter nach Anspruch 8, ferner umfassend:
einen vorgelagerten Entlüftungsdurchgang (224, 324, 424, 524, 624), der durch das Filtergehäuse (212, 312, 412, 512, 612) angeordnet ist, wobei der vorgelagerte Entlüftungsdurchgang (224, 324, 424, 524, 624) in Fluidverbindung mit dem vorgelagerten Abschnitt (234, 334, 434, 534, 634) steht; und
einen vorgelagerten Entleerungsdurchgang (226, 326, 426, 526, 626), der durch das Filtergehäuse (212, 312, 412, 512, 612) angeordnet ist, wobei der vorgelagerte Entleerungsdurchgang (226, 326, 426, 526, 626) in Fluidverbindung mit dem vorgelagerten Abschnitt (234, 334, 434, 534, 634) steht.

10. Flüssigkeitsrückgewinnungsfilter nach Anspruch 1 or 8, wobei der Einlassdurchgang (318,418, 518) im Wesentlichen radial durch das obere Ende (314, 414, 514) des Filtergehäuses (312, 412, 512) angeordnet ist und wobei der Auslassdurchgang (520) im Wesentlichen radial durch das obere Ende (514) des Filtergehäuses (512) im Wesentlichen gegenüber dem Einlassdurchgang (518) angeordnet ist.

11. Flüssigkeitsrückgewinnungsfilter nach Anspruch 1 or 8, wobei der Einlassdurchgang (618) im Wesentlichen radial durch das untere Ende (616) des Filtergehäuses (612) angeordnet ist und wobei der Auslassdurchgang (620) im Wesentlichen radial durch das obere Ende (614) des Filtergehäuses (612) allgemein diametral gegenüber dem Einlassdurchgang (618) angeordnet ist.

12. Flüssigkeitsrückgewinnungsfilter nach Anspruch 9, ferner umfassend einen Inline-Gasfilter (225, 325, 425, 525, 625), der in dem vorgelagerten Entlüftungsdurchgang (224, 324, 424, 524, 624) angeordnet ist.

## Revendications

1. Filtre de récupération de liquide comprenant :
une coque de filtre (212, 312, 412, 512, 612) ayant une extrémité supérieure (214, 314, 414, 514, 614), une extrémité inférieure (216, 316, 416, 516, 616) opposée à l'extrémité supérieure (214, 314, 414, 514, 614), et une paroi cylindrique s'étendant entre l'extrémité supérieure (214, 314, 414, 514, 614) et l'extrémité inférieure (216, 316, 416, 516, 616), la coque (212, 312, 412, 512, 612) définissant un volume interne (228, 328, 428, 528, 628) ;
un élément filtrant (230, 330, 430, 530, 630) disposé à l'intérieur de la coque de filtre (212, 312, 412, 512, 612), un espace formé entre la coque (212, 312, 412, 512, 612) et l'élément filtrant (230, 330, 430, 530, 630) définissant une section amont (234, 334, 434, 534, 634) du volume interne (228, 328, 428, 528, 628), l'élément filtrant (230, 330, 430, 530, 630) ayant un côté entrée et un noyau de sortie (232, 332, 432, 532, 632), le côté entrée de l'élément filtrant (230, 330, 430, 530, 630) communiquant fluidiquement avec la section amont (234, 334, 434, 534, 634) ;
un passage d'entrée (218, 318, 418, 518, 618) disposé à travers la coque de filtre (212, 312, 412, 512, 612), le passage d'entrée (218, 318, 418, 518, 618) communiquant fluidiquement avec la section amont (234, 334, 434, 534, 634) ;
un passage de sortie (220, 320, 420, 520, 620) disposé à travers la coque de filtre (212, 312,412, 512, 612), le passage de sortie (220, 320, 420, 520, 620) communiquant fluidiquement avec le noyau de sortie (232, 332,432, 532, 632) de l'élément filtrant (230, 330, 430, 530, 630) ;
**caractérisé par** un orifice d'aération/de purge aval (222, 322, 422, 522, 622) disposé à travers la coque de filtre (212, 312, 412, 512, 612) avec un filtre à gaz en ligne (236, 336, 436, 536, 636 ) disposé dans l'orifice d'aération/de purge aval (222, 322, 422, 522, 622), l'orifice d'aération/de purge aval (222, 322, 422, 522, 622) communiquant fluidiquement avec le noyau de sortie (232, 332, 432, 532, 632) de l'élément filtrant (230, 330, 430, 530, 630), dans lequel l'orifice d'aération/de purge (222, 322, 422, 522, 622) est conçu pour permettre l'introduction d'un gaz sous pression, stérilisé par le filtre à gaz en ligne (236, 336, 436, 536, 636), dans le noyau de sortie (232, 332, 432, 532, 632) pour purger les liquides filtrés, retenus dans le noyau de sortie (232, 332, 432, 532, 632) après la fin d'une opération de filtrage, hors du passage de sortie (220, 320, 420, 520, 620) pour récupérer les liquides filtrés retenus.

2. Filtre de récupération de liquide selon la revendication 1, dans lequel le passage de sortie (220, 320, 420) est disposé à travers l'extrémité inférieure (216, 316, 416) de la coque de filtre (212, 312, 412) et dans lequel l'orifice d'aération/de purge aval (222, 322, 422, 522, 622) est disposé à travers l'extrémité supérieure (214, 314, 414, 514, 614) de la coque de filtre (212, 312, 412, 512, 612).

3. Filtre de récupération de liquide selon la revendication 1, dans lequel le passage de sortie (520, 620) est disposé à travers l'extrémité supérieure (514, 614) de la coque de filtre (512, 612) et dans lequel l'orifice d'aération/de purge aval (222, 322, 422, 522, 622) est disposé à travers l'extrémité supérieure (214, 314, 414, 514, 614) de la coque de filtre (212, 312, 412, 512, 612).

4. Filtre de récupération de liquide selon la revendication 1 comprenant en outre :
un passage d'aération amont (224, 324, 424, 524, 624) disposé à travers la coque de filtre (212, 312, 412, 512, 612), le passage d'aération amont (224, 324, 424, 524, 624) communiquant fluidiquement avec la section amont (234, 334, 434, 534, 634) ; et,
un passage de vidange amont (226, 326, 426, 526, 626) disposé à travers la coque de filtre (212, 312, 412, 512, 612), le passage de vidange amont (226, 326, 426, 526, 626) communiquant fluidiquement avec la section amont (234, 334, 434, 534, 634).

5. Filtre de récupération de liquide selon la revendication 1, dans lequel le passage d'entrée (218) est disposé sensiblement axialement à travers l'extrémité supérieure (214) de la coque de filtre (212) et dans lequel le passage de sortie (220, 320, 420) est disposé à travers l'extrémité inférieure (216, 316, 416) de la coque de filtre (212, 312, 412) et s'étend sensiblement coaxialement à l'élément filtrant (230, 430).

6. Filtre de récupération de liquide selon la revendication 1, dans lequel le passage d'entrée (318, 418, 518) est disposé sensiblement radialement à travers l'extrémité supérieure (314, 414, 514) de la coque de filtre (312, 412, 512) et dans lequel le passage de sortie le passage (320) est disposé sensiblement radialement à travers l'extrémité inférieure (316) de la coque de filtre (312).

7. Filtre de récupération de liquide selon la revendication 4, comprenant en outre un filtre à gaz en ligne (225, 325, 425, 525, 625) disposé dans le passage d'aération amont (224, 324, 424, 524, 624).

8. Filtre de récupération de liquide selon la revendication 1 comprenant en outre :
un passage de vidange de sortie (538, 638) disposé à travers l'extrémité inférieure (516, 616) de la coque de filtre (512, 612), le passage de vidange de sortie (538, 638) communiquant fluidiquement avec le noyau de sortie (532, 632) de l'élément filtrant (530, 630), dans lequel le passage de sortie (520, 620) est disposé à travers l'extrémité supérieure (514, 614) de la coque de filtre (512, 612).

9. Filtre de récupération de liquide selon la revendication 8 comprenant en outre :
un passage d'aération amont (224, 324, 424, 524, 624) disposé à travers la coque de filtre (212, 312, 412, 512, 612), le passage d'aération amont (224, 324, 424, 524, 624) communiquant fluidiquement avec la section amont (234, 334, 434, 534, 634) ; et,
un passage de vidange amont (226, 326, 426, 526, 626) disposé à travers la coque de filtre (212, 312, 412, 512, 612), le passage de vidange amont (226, 326, 426, 526, 626) communiquant fluidiquement avec la section amont (234, 334, 434, 534, 634).

10. Filtre de récupération de liquide selon la revendication 1 ou 8, dans lequel le passage d'entrée (318, 418, 518) est disposé sensiblement radialement à travers l'extrémité supérieure (314, 414, 514) de la coque de filtre (312, 412, 512) et dans lequel le passage de sortie (520) est disposé sensiblement radialement à travers l'extrémité supérieure (514) de la coque de filtre (512), sensiblement à l'opposé du passage d'entrée (518).

11. Filtre de récupération de liquide selon la revendication 1 ou 8, dans lequel le passage d'entrée (618) est disposé sensiblement radialement à travers l'extrémité inférieure (616) de la coque de filtre (612) et dans lequel le passage de sortie (620) est disposé sensiblement radialement à travers l'extrémité supérieure (614) de la coque de filtre (612), généralement diamétralement opposé au passage d'entrée (618).

12. Filtre de récupération de liquide selon la revendication 9, comprenant en outre un filtre à gaz en ligne (225, 325, 425, 525, 625) disposé dans le passage d'aération amont (224, 324, 424, 524, 624).
